# EUROPÄISCHE PATENTANMELDUNG

(11) **EP 1 700 682 A2**
(43) Veröffentlichungstag der Anmeldung: **13.09.2006**
(21) Anmeldenummer: 06004172.0
(22) Anmeldetag: 02.03.2006
(51) Int. Cl.: B29C 44/60, B29C 44/30

(54) **Verfahren und Anlage zur kontinuierlichen Herstellung von Schaumstoffplatten**

(30) Priorität: 10.03.2005 DE 102005010999
(71) Anmelder: Bayer MaterialScience AG, 51368 Leverkusen (DE)
(72) Erfinder: Ehbing, Hubert, Dr., 51519 Odenthal (DE); Kellerhof, Ingo, 53819 Neunkirchen-Seelscheid (DE); Rauhaus, Rainer, 42719 Solingen (DE); Möhlenkamp, Carsten, 50668 Köln (DE)

(57) **Zusammenfassung**

Die Erfindung betrifft eine Anlage und ein Verfahren zur Herstellung von Schaumstoffplatten in einem kontinuierlichem Schaumprozess mit folgenden Schritten:
- Erfassung des Ist-Aufschäumprofils des Schaumstoffs parallel zur Förderrichtung des Transportbandes,
- Bestimmung einer Stellgröße für den Schaumprozess in Abhängigkeit von einer Abweichung des Ist-Aufschäumprofils vom Soll-Aufschäumprofil.

## Beschreibung

Die Erfindung betrifft ein Verfahren und eine Anlage zur Herstellung von Schaumstoffplatten in einem kontinuierlichen Schaumprozess, insbesondere zur Herstellung von Polyurethan-Schaumstoffplatten.

Für die Herstellung von Weichblockschaumstoff sind verschiedene computergestützte Verfahren zur Prognose von Schaumeigenschaften und für die Qualitätssicherung bei der Herstellung von Polyurethan-Schaum bekannt geworden, zum Beispiel aus "Software to Manage a Continous Production of Flexible Polyurethane Foams by Slabstock Technology", Journal of CELLULAR PLASTICS, Volume 33, März 1997, Seite 102, und "Mathematical Property Prediction Models for Flexible Polyurethane Foams", Adv. Urethane Sci. Techn. 14 (1998), Seiten 1 bis 44.

Für die Fertigung kompakter Polyurethan-Bauteile nach dem RIM-Verfahren wurden zur Optimierung der Produktivität und der Qualität sogenannte Expertensysteme entwickelt. In "Experten mit System, Prozesssteuerung des PUR-RRIM-Verfahrens zur Herstellung von Karosserieaußenteilen", Kunststoffe, 88. Jahrgang, 10/98 und "PUR-Teile kostengünstig fertigen, Stand der Polyurethan-RRIM-Technologie", Kunststoffe, 91. Jahrgang, 4/2001 sind derartige Expertensysteme zur Analyse von Prozessparametern bei der RIM-Verarbeitung bekannt. Diese Expertensysteme unterstützen bei der Prozessüberwachung, der Qualitätssicherung und der vorbeugenden Instandhaltung.

Zur kontinuierlichen Herstellung von mit Decksichten versehenen Schaumplatten beschreibt DE 28 19 709 B1 ein Verfahren, bei dem quer zur Förderrichtung die Dicke des Schaums mit Ultraschall erfasst wird. Die Fertigungsanlage wird dann über die Förderbandgeschwindigkeit und/oder die aufgebrachte Schaummenge gesteuert. Der im Verfahren beschriebene Regelalgorithmus dient zur Reduktion von Qualitätseinbußen, von Betriebsunterbrechungen und von Personalaufwand.

Für einen kontinuierlichen Blockschaumprozess wird in DE 102 37 005 A1 ein Verfahren beschrieben, bei dem entlang der Fördervorrichtung kontinuierlich das Schäumprofil in Form lokaler Schaumhöhen erfasst wird. Vorzugsweise werden hierzu Laser-Abstandssensoren eingesetzt. In Abhängigkeit von möglichen Abweichungen zwischen den Ist-Schaumhöhen und vorgegebenen Soll-Schaumhöhen wird eine Stellgröße zur Steuerung des Blockschaumprozesses ermittelt.

Die Herstellung von Metallverbundelementen nach kontinuierlichen oder diskontinuierlichen Verfahren ist bekannt. Vorrichtungen zur kontinuierlichen Herstellung sind beispielsweise in DE 1 609 668 A, DE 1 247 612 A oder DE 92 16 306 U1 beschrieben.

Ferner sind verschiedene Anlagentypen zur kontinuierlichen oder diskontinuierlichen Herstellung von Polyurethan-Hartschaumplatten und Polyurethan-Hartschaum-Verbundplatten bekannt. Beispielsweise werden Polyurethan-Hartschaumplatten mit Doppeltransportbandanlagen hergestellt. Derartige Anlagen sind beispielsweise von der Hennecke GmbH, Birlinghoverner Straße 30, 53754 Sankt Augustin, Deutschland unter dem Produktnamen CONTIMAT® kommerziell erhältlich.

Um ein qualitativ hochwertiges und reproduzierbares Produkt herzustellen, ist bei der kontinuierlichen Fertigung von Polyurethan-Schaumstoffplatten ein möglichst stationärer Betriebszustand anzustreben. Dieser ist erreicht, wenn das gesamte Aufschäumprofil eine gewünschte Form besitzt und ortsfest gegenüber der Umgebung bzw. der Formpresse bleibt. Dazu sind der Reaktionsablauf des Polyurethan-Systems, die aufgebrachte Schaummenge, die Bandgeschwindigkeit und die Temperierung der gesamten Anlage und der Rohstoffkomponenten aufeinander abzustimmen.

DE 196 16 643 C1 beschreibt ein Verfahren zur Herstellung einer Schaumstoffplatte, bei dem der Abstand der Aufschäumflanke von einem festen Punkt vor dem Presseneinlauf gemessen wird. Der Istwert dieses Abstandes wird mit einem schaumstoffabhängigen Sollwert verglichen und nach Maßgabe der Differenz zwischen Ist- und Sollwert wird die Arbeitsgeschwindigkeit der Anlage gesteuert. Die Rezeptur und mithin die Kinetik des Polyurethan-Systems, die aufgebrachte Menge des Reaktionsgemisches sowie die Temperatur der Anlage werden nicht berücksichtigt.

Bei eingestellter Rezeptur, bekannten Werten für Höhe und Breite der Schaumstoffplatte und fester Austragsleistung müsste demnach theoretisch die Geschwindigkeit der Anlage so wählbar sein, dass der Schaum den Raum zwischen den Deckschichten in der Formenpresse gerade ausfüllt und keine Kompression des Schaums auftritt. In der Praxis ist diese Einstellung nicht möglich und auch nicht unbedingt gewollt. Der Raum zwischen den Deckschichten muss voll ausgeschäumt werden. Dazu ist eine gewisse Verdichtung des Reaktionsgemisches notwendig, ohne dass das Gemisch übermäßig gegen die Bandlaufrichtung ausweicht. Dieses Ausweichen wird Überwälzen genannt. Leichtes Überwälzen ist produktspezifisch teilweise gewünscht, da so eine leicht wellige Oberfläche des aufschäumenden Reaktionsgemisches geglättet wird und unter der oberen Deckschicht keine Blasen oder Lufteinschlüsse entstehen. Zu starkes Überwälzen führt zu größerer Reibung zwischen dem Schaum und der oberen Deckschicht bzw. der oberen Pressenwand. Die Schaumzellen werden in Bandlaufrichtung gestreckt und die Druck- und Zugfestigkeit in Dickenrichtung der Platten ist dadurch beeinträchtigt. Ferner können hierdurch auch Vertikalrisse in der Schaumplatte entstehen. Andererseits führt das Überwälzen des Schaumstoffs besonders im Bereich der oberen Deckschicht zu umorientierten, flach liegenden Zellen. Dies hat in der Regel niedrigere Wärmeleitfähigkeiten zur Folge und kann für bestimmte Anwendungen gewollt sein.

Durch die Exothermie der Polyurethanreaktion heizt sich die Produktionsanlage während des Produktionslaufes auf. Da dies sich auf die Reaktionsgeschwindigkeit und mithin auf das Aufschäumprofil und den Grad der Übenvälzung auswirkt, muss während des Betriebes gegengesteuert werden. Dies kann nur in Abstimmung zwischen Rezeptur, Produktionsgeschwindigkeit, Auftragsmenge, den Prozesstemperaturen und der Geometrie der herzustellenden Schaumstoffplatte erfolgen.

Das Aufschäumprofil und insbesondere die Überwälzung müssen spezifisch für das jeweils hergestellte Produkt eingestellt werden. Um eine gleich bleibende Qualität der Schaumstoffplatte zu erreichen, muss dafür gesorgt werden, dass das Aufschäumprofil und mithin die Überwälzung über den gesamten Produktionsprozess und von Charge zur Charge gleich bleibt. Eine exakte Positionierung des Profils ist - in gewissen Grenzen - nicht wichtig.

Unter Aufschäumprofil ist der gesamte Aufschäumverlauf von Beginn des Schäumens bis zur Berührung der oberen Deckschicht gemeint, der sich dem Betrachter, der parallel zur Förderrichtung des Transportbandes auf den aufschäumenden Schaum blickt, ergibt.

Gegenstand der Erfindung ist die verbesserte Kontrolle und eine verbesserte Regelung der Herstellung von Schaumstoffplatten in einem kontinuierlichem Schaumprozess durch Erfassung des Schäumprofils parallel zur Förderrichtung des Transportbandes und insbesondere der Überwälzung in der Anlage. Das Ist-Schäumprofil und die Ist-Überwälzung werden mit einem rezepturspezifischen Soll-Profil verglichen. Aus einer eventuellen Abweichung des Ist-Profils vom Soll-Profil wird eine Stellgröße für die Nachregelung des Prozesses ermittelt. Im Gegensatz zu DE 196 16 643 C1 erfolgt die Regelung nicht über die Erfassung des exakten Abstandes zu einem festen Punkt, sondern durch Erfassung der relativen Werte, die sich aus Soll- und Ist-Profil ergeben.

Ein besonderer Vorteil der Erfindung ist, dass bereits zu einem frühen Zeitpunkt im Produktionsablauf eine qualitative und quantitative Kontrolle des Schäumvorgangs erfolgen kann. Ferner können während der laufenden Produktion des Schaumstoffs Anlagenparameter und/oder die Zusammensetzung des Ausgangsmaterials für den Schaumstoff nachgeregelt werden, um so eine möglichst gleich bleibende Produktqualität zu erzielen. Dadurch werden Schwankungen der Produkteigenschaften, wie zum Beispiel der Druckfestigkeit, auf Grund von variablem Aufschäumverhalten bzw. sich ändernder Überwälzung reduziert.

Ein weiterer Vorteil der Erfindung besteht darin, dass durch die Erfassung des Aufschäumprofils und der Überwälzung bereits mit Produktionsbeginn die Zeit für das Einfahren der Anlage reduziert wird. Der Ausschuss während des Einfahrens der Produktionsanlage kann so reduziert werden.

Erfindungsgemäß wird vor dem Presseneinlauf und parallel zur Förderrichtung des Transportbandes eine Vorrichtung zur Erfassung des Aufschäumprofils bzw. der Überwälzung installiert. Dabei kommen bevorzugt mehrere über einander und/oder versetzt angeordnete Laserabstandssensoren zum Einsatz, die eine Messung des Ist-Profils des Schaums erlauben. Alternativ oder ergänzend können auch Ultraschall-Sensoren, Lichtschranken, CCD-Kameras, oder andere Sensoren, die eine Profilvermessung des Schaumprofils erlauben, eingesetzt werden.

Nach einer weiteren bevorzugten Ausführungsform wird zur Erfassung des Schaumprofils ein Laserscanner eingesetzt, der das Profil 2-dimensional quer zur Förderrichtung erfasst. Vorzugsweise wird dazu eine Laserlinie auf den Schaum projiziert und die Profilhöhe wird durch Triangulation erfasst. Durch Einsatz mehrerer Scanner oder Schwenken der Laserlinie quer zur Förderrichtung kann die Schaumkontur über den gesamten Plattenquerschnitt abgebildet werden.

Nach einer bevorzugten Ausführungsform der Erfindung erfolgt die Herstellung der Schaumstoffs in einer Doppeltransportanlage, beispielsweise einer Anlage vom Typ Hennecke CONTIMAT® . Solche Anlagen haben üblicherweise eine Fördervorrichtung, auf der der expandierende Schaumstoff in eine Förderrichtung bewegt wird. In der Regel wird bei solchen Anlagen mit flexiblen und/oder starren Deckschichten gearbeitet.

In einer bevorzugten Ausführungsform der Erfindung mit einer punktuellen Abtastung des Schäumprofils wird durch die gemessenen Ist-Profilwerte des Schaums eine Ausgleichskurve gelegt, die mit einer Soll-Kurve verglichen wird. Beispielsweise wird die Differenz der Steigungen der Kurven oder die Differenz der Integrale der Kurven im Expansionsbereich als Basis für die Bestimmung einer Stellgröße verwendet.

Nach einer bevorzugten Ausführungsform der Erfindung dient die Fördergeschwindigkeit des expandierenden Schaumstoffs als Stellgröße. Weicht beispielsweise das Schäumprofil als integraler Wert derart vom vorgegebenen Soll-Profil ab, dass eine zu starke Überwälzung auftritt, so wird die Fördergeschwindigkeit so lange erhöht, bis das Ist-Profil hinreichend mit den Soll-Profil übereinstimmt.

Nach einer weiteren bevorzugten Ausführungsform der Erfindung dient die pro Zeiteinheit dem Blockschaumprozess zugeführte Materialmenge als Stellgröße. Weicht beispielsweise das Schäumprofil als integraler Wert derart vom vorgegebenen Soll-Profil ab, dass eine zu starke Überwälzung auftritt, so wird die pro Zeiteinheit zugeführte Materialmenge so lange verringert, bis das Ist- und das Soll-Profil hinreichend übereinstimmen.

Nach einer weiteren bevorzugten Ausführungsform der Erfindung dient die chemische Zusammensetzung des dem Blockschaumprozess zugeführten Materials als Stellgröße. Weichen beispielsweise das Ist-Profil und das Soll-Profil zu stark voneinander ab, so wird die chemische Zusammensetzung so lange verändert, bis das Ist-Profil hinreichend mit dem Soll-Profil übereinstimmt. Insbesondere kann die Katalysatormenge und/oder die Menge eines zugesetzten physikalischen Treibmittels (z.B. Pentan) und/oder die Wassermenge - als chemisch wirkendes Treibmittel - variiert werden.

Nach einer weiteren bevorzugten Ausführungsform der Erfindung dient die Temperatur der Reaktionskomponenten als Stellgröße. Weichen beispielsweise das Ist-Profil und das Soll-Profil zu stark voneinander ab, so wird die Temperatur der Reaktionskomponenten solange variiert, bis Ist-Profil und Soll-Profil wieder übereinstimmen.

Nach einer weiteren bevorzugten Ausführungsform der Erfindung dienen die Temperaturen der Deckschichten oder der Presse als Stellgröße. Weichen beispielsweise das Ist-Profil und das Soll-Profil zu stark voneinander ab, so werden die Temperaturen der Deckschichten oder der Formpresse so lange verändert, bis das Ist-Profil hinreichend mit dem Soll-Profil übereinstimmt.

Nach einer weiteren bevorzugten Ausführungsform der Erfindung werden aufgrund einer Abweichung des Ist-Profils vom Soll-Profil des Schaums mehrere verschiedene Stellgrößen bestimmt, wie zum Beispiel eine Änderung der Fördergeschwindigkeit, der Temperatur der Formenpresse oder der Deckschichten, der pro Zeiteinheit zugeführten Materialmenge und/oder der chemischen Zusammensetzung des zugeführten Materials.

Nach einer weiteren bevorzugten Ausführungsform der Erfindung wird aufgrund des Ist-Profils des Schaums zumindest eine Produkteigenschaft der resultierenden Schaumstoffplatte prognostiziert. Beispielsweise kann die Zug- und/oder die Druckfestigkeit der Schaumplatte prognostiziert werden. Für diese Prognose kann ein rigoroses Regressionsmodell verwendet werden. Alternativ oder zusätzlich kann ein neuronales Netz oder ein hybrides neuronales Netz für die Prognose verwendet werden. Als weitere Eingangsgrößen für die Prognose dienen die Rezeptur des Reaktionsgemisches, die Fördergeschwindigkeit, die Temperatur der Formenpresse und der Deckschichten und die pro Zeiteinheit zugeführte Materialmenge.

Nach einer weiteren bevorzugten Ausführungsform der Erfindung dienen die prognostizierten Produkteigenschaften zur Klassifizierung der Qualität der hergestellten Schaumstoffplatten. Beispielsweise werden die prognostizierten Qualitäten in einer Datenbank abgelegt.

Nach einer weiteren bevorzugten Ausführungsform der Erfindung werden aufgrund der Prognose zumindest einer Produkteigenschaft Bereiche geringer Qualität des hergestellten Schaumstoffs identifiziert. Solche Bereiche werden aus der Schaumstoffplatte ausgeschnitten. Im Vergleich zum Stand der Technik hat dies den Vorteil, dass weniger Ausschussmaterial produziert wird.

Meist werden in einer kontinuierlichen Schaumplattenfertigung Platten von vorgegebener Länge (zum Beispiel 6 m) aus der Schaumplatte geschnitten und die einzelnen Platten werden dann im nachhinein einer Qualitätsprüfung unterzogen. Dagegen erlaubt es das erfindungsgemäße Verfahren, Schaumplatten, für die eine geringere Qualität prognostiziert wurde, in unterschiedliche Qualitätsstufen zu klassifizieren und entsprechend zu sortieren.

Im Weiteren werden bevorzugte Ausführungsformen der Erfindung mit Bezugnahme auf die Zeichnungen näher erläutert. Es zeigen:
- Figur 1: eine Prinzipdarstellung einer bevorzugten Ausführungsform der Erfindung bei einem Prozess zur kontinuierlichen Herstellung von Schaumstoffplatten mit einer Doppeltransportbandanlage,
- Figur 2: ein Aufschäumprofil mit geringer Überwälzung,
- Figur 3: ein Aufschäumprofil mit starker Überwälzung,
- Figur 4: ein Aufschäumprofil ohne Überwälzung,
- Figur 5: den Vergleich eines Soll-Profils und eines durch zu große Überwälzung abweichenden Ist-Profils,
- Figur 6: den Vergleich eines Soll-Profils und eines durch zu geringe Überwälzung abweichenden Ist-Profils,

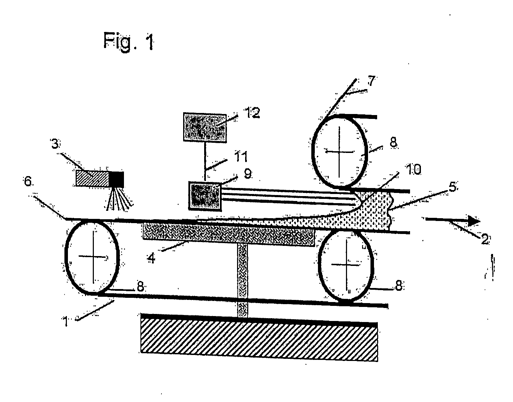

Figur 1 zeigt eine bevorzugte Ausführungsform der Erfindung. Dargestellt ist eine Doppeltransportbandanlage zur kontinuierlichen Herstellung von Schaumstoffplatten, insbesondere aus Polyurethan-Schaumstoff. Die Anlage weist ein Transportband 1 auf, welches in der Förderrichtung 2 bewegt wird. Am Anfang des Transportbands 1 befindet sich oberhalb des Transportbands 1 ein Mischkopf 3. Der Mischkopf 3 dient zur Aufbringung eines reaktiven chemischen Systems auf die Auftragsplatte 4 des Transportbands 1. Bei dem reaktiven chemischen System handelt es sich um ein schäumendes Gemisch, beispielsweise zur Herstellung von Polyurethan-Schaumstoff.

Das reaktive chemische Gemisch expandiert auf dem Transportband 1, so dass ein Expansionsbereich mit expandierendem Schaum 5 entsteht. Der Schaum wird dabei auf eine untere Deckschicht 6 aufgebracht. Auf die Oberseite wird ebenfalls eine Deckschicht 7 aufgebracht. Die Deckschichten 6 und 7 können aus flexiblen und/oder starren Materialien bestehen. Als Deckschichten für Dämmplatten werden Natronkraftpapier, bituminiertes Papier, Bitumenpappe, Krepppapier, PE-beschichtete Glasvliese und Aluminiumfolien verwendet. Bauelemente mit beidseitig starren Deckschichten werden mit lackiertem bzw. beschichtetem Stahl,- Edelstahl,-Holz,- oder Aluminiumblech oder GFK-Deckschichten versehen. Kombinationsplatten (Composites) erhält man, wenn als untere Deckschicht starre Platten (z.B. Span-, Gipskarton-, Faserzement-, Glasfaser-, Steinwoll- oder Perlitplatten) und als obere Deckschicht eine rollbare Deckschicht eingesetzt werden. Die Deckschichten werden über Rollen 8 zugeführt. Das aufschäumende Gemisch erreicht im Bandkanal die obere Deckschicht 7. Durch den definierten Abstand des Oberbandes zum Unterband fungiert dieser Anlagenbereich als Presse und gewährleistet eine exakte Plattendicke.

Unmittelbar hinter dem Mischkopf ist eine Messvorrichtung 9 installiert. Die Messvorrichtung 9 dient zur Vermessung des Schäumprofils 10 im Expansionsbereich des Schaums. Die Messvorrichtung 9 ist mit einem Bussystem 11 verbunden. Das Bussystem 11 ist mit einem Regler 12 verbunden. Über das Bussystem 11 erhält der Regler 12 die Messsignale der Messvorrichtung 9. Aufgrund dieser Messsignale ermittelt der Regler 12 eine Stellgröße zur Nachregelung des Schaumprozesses. Beispielsweise dient als Stellgröße die Geschwindigkeit des Transportbands 1 und/oder die Pro-Zeiteinheit über den Mischkopf 3 zugeführte Menge des reaktiven chemischen Systems und/oder die chemische Zusammensetzung des Systems und/oder die Temperatur der Auftragsplatte 4 und/oder die Temperaturen der Rohstoffkomponenten und/oder die Temperatur der Deckschichten 6 und 7.

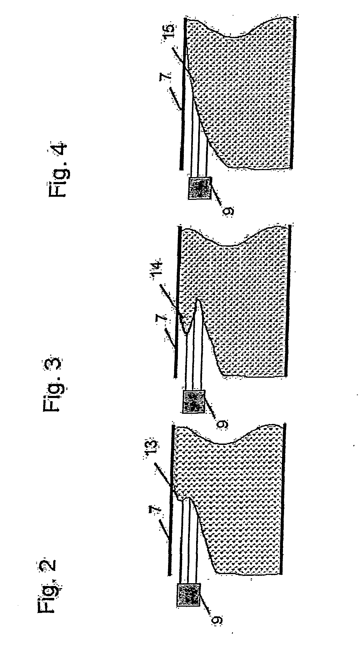

Die Figur 2 zeigt ein Aufschäumprofil mit geringer Überwälzung 13. Unmittelbar unterhalb der oberen Deckschicht 7 fließt der Schaum entgegen der Förderrichtung 2. Figur 3 zeigt ein Aufschäumprofil mit starker Überwälzung 14, bei dem der Schaum unterhalb der oberen Deckschicht 7 erheblich entgegen der Förderrichtung 2 fließt. Figur 4 zeigt ein Schäumprofil ohne Überwälzung 15, bei der unterhalb der oberen Deckschicht 7 kein Schaumfließen entgegen der Förderrichtung 2 auftritt.

Zur Durchführung der Regelung wird der Unterschied zwischen dem Ist- und dem Soll-Profil ausgewertet. Dies kann beispielsweise so erfolgen, dass eine Ausgleichskurve durch die messtechnisch ermittelten Ist-Profilwerte gelegt wird. Hierbei kann es sich um eine Ausgleichsgerade oder um ein Polynom, z.B. ein Spline-Polynom oder um Wavelets handeln.

Zur Bestimmung einer Stellgröße können beispielsweise die unterschiedlichen Steigungen der Ist- und Soll-Profilkurven herangezogen werden, das heißt es wird die Differenz zwischen der Kurvensteigungen gebildet. Diese Differenz stellt ein Maß für die Abweichung des Ist-Profils vom Soll-Profil dar.

Alternativ oder zusätzlich können die Integrale der Ist- und der Soll-Profilkurven gebildet werden. Die Differenz der beiden Integrale ergibt wiederum ein Maß für die Abweichung des Ist-Profils vom Soll-Profil dar.

Alternativ oder zusätzlich können auch die Wendepunkte der Ist- und der Sollkurven für die Ermittlung einer Stellgröße verwendet werden. Typischerweise erhält man beim Aufschäumprofil mit Überwälzung eine Kurve mit einem Wendepunkt, der für die Ermittlung der Stellgröße verwendet werden kann.

Aufgrund der Abweichung zwischen dem Ist- und dem Soll-Profil wird eine Stellgröße zur Nachregelung des Schaumprozesses ermittelt. Weicht das Ist-Profil vom Soll-Profil ab, so kann etwa die Geschwindigkeit des Transportbands 1 angepasst werden. Alternativ oder zusätzlich können die pro Zeiteinheit von dem Mischkopf 3 aufgebrachte Menge des reaktiven chemischen Systems, die Zusammensetzung des reaktiven chemischen Systems, und/oder die Prozesstemperaturen (beispielsweise die Temperaturen der Reaktionskomponenten oder der Deckschichten) angepasst werden.

Die Regelung des Schaumprozesses erfolgt über den Regler 12. Der Regler 12 beinhaltet ein Modul zur Bestimmung des Ist-Profils. Ferner beinhaltet der Regler 12 ein Modul für den Vergleich des ermittelten Ist-Profils mit dem gespeicherten Soll-Profil. Es wird eine Maßzahl errechnet, die ein Maß für die Abweichung des Ist- vom Soll-Profil angibt. Diese Maßzahl dient zur Ermittlung einer Stellgröße für die Nachregelung des Prozesses.

Die Anlage weist ferner ein Computersystem mit einem Modul zur Prognose von zumindest einer Produkteigenschaft der hergestellten Schaumstoffplatte, einer Tabelle zur Klassifizierung der prognostizierten Qualität des hergestellten Schaumstoffs sowie einer Datenbank auf. In der Datenbank kann die Güte der prognostizierten Produktqualität in Längsrichtung der Schaumplatten gespeichert werden, das heißt für eine bestimmte Stelle der kontinuierlich hergestellten Schaumplatte wird die prognostizierte Produktqualität in der Datenbank abgespeichert. Das Computersystem erhält als Eingangsgröße die Ist-Profilkurve. Alternativ werden nur die gemessenen Ist-Profilwerte eingegeben. Ferner kann auch die ermittelte Maßzahl, welche das Maß der Abweichung zwischen der Ist- und der Soll-Profilkurve angibt, in das Computersystem eingegeben werden.

Aufgrund dieser Eingabewerte werden eine oder mehrere Produkteigenschaften des aktuell hergestellten Schaumstoffs prognostiziert. Bei den prognostizierten Produkteigenschaften kann es sich zum Beispiel um die Druck- oder die Zugfestigkeiten handeln.

Mittels der prognostizierten Produkteigenschaften erfolgt dann eine Klassifizierung der Güte durch einen Zugriff auf eine Tabelle, in der zulässige Toleranzwerte für die Produkteigenschaften je nach Produktgüte gespeichert sind. Die prognostizierten Produkteigenschaften und die ihnen zugeordnete Güte werden dann in der Datenbank für die aktuell hergestellten Schaumstoffplatte abgelegt.

Üblicherweise wird der aus dem kontinuierlichen Schaumprozess resultierende Schaumstoff in Platten von zum Beispiel 6 m Länge unterteilt. Hierzu weist die Anlage eine Schneidvorrichtung auf. Vorzugsweise wird diese Schneidvorrichtung von dem Computersystem angesteuert. Wenn das Computersystem einen Abschnitt der kontinuierlichen hergestellten Schaumplatte mit einer geringeren Güte prognostiziert, so wird dieser Abschnitt durch Ansteuerung der Schneidvorrichtung aus der Schaumplatte herausgeschnitten. Auf diese Art und Weise lässt sich der Ausschuss des Schaumprozesses reduzieren.

Eine Ausführungsform des Prognosemoduls ist ein neuronales Netz. Die Eingangsgrößen des neuronalen Netzes sind das Ist-Aufschäumprofil, die Zusammensetzung des reaktiven chemischen Systems, welches durch den Mischkopf 3 auf das Transportband 1 aufgebracht wird sowie Anlagenparameter, wie zum Beispiel Drücke und Temperaturen und vorzugsweise auch Umweltparameter, wie zum Beispiel der Atmosphärendruck. Aus diesen Eingangsgrößen prognostiziert das neuronale Netz eine oder mehrere Produkteigenschaften. Die zum Training des neuronalen Netzes erforderlichen Trainingsdaten können durch separate Versuchsreihen oder durch Aufnahme von Daten einer aktuellen Produktion gewonnen werden.

### Bezugszeichenliste

- Transportband: 1
- Förderrichtung: 2
- Mischkopf: 3
- Auftragsplatte: 4
- Expandierender Schaum: 5
- Untere Deckschicht: 6
- Obere Deckschicht: 7
- Rollen: 8
- Messvorrichtung: 9
- Aufschäumprofil: 10
- Bussystem: 11
- Regler: 12
- Schaumprofil mit geringer Überwälzung: 13
- Schaumprofil mit großer Überwälzung: 14
- Schaumprofil ohne Überwälzung: 15

## Patentansprüche

1. Verfahren zur Herstellung von Schaumstoffplatten in einem kontinuierlichem Schaumprozess mit folgenden Schritten:
- Erfassung des Ist-Aufschäumprofils parallel zur Förderrichtung des Transportbandes,
- Bestimmung einer Stellgröße für den Schaumprozess in Abhängigkeit von einer Abweichung des Ist-Aufschäumprofils vom Soll-Aufschäumprofil.

2. Verfahren nach Anspruch 1, wobei es sich bei dem Schaumstoff um Polyurethan-Schaumstoff handelt.

3. Verfahren nach Anspruch 1 oder 2, bei dem es sich um einen kontinuierlichen Schaumprozess auf einer Doppeltransportbandanlage handelt.

4. Verfahren nach einem der Ansprüche 1 bis 3. wobei das Ist-Aufschäumprofil mit einer Messsensorik erfasst wird.

5. Verfahren nach einem der Ansprüche 1 bis 4, wobei die Fördergeschwindigkeit als Stellgröße dient.

6. Verfahren nach einem der Ansprüche 1 bis 5. wobei die pro Zeiteinheit dem Schaumprozess zugeführte Materialmenge als Stellgröße dient.

7. Verfahren nach einem der Ansprüche 1 bis 6, wobei die chemische Zusammensetzung des dem Schaumprozess zugeführten Materials als Stellgröße dient.

8. Verfahren nach einem der Ansprüche 1 bis 7, wobei die Temperatur des dem Schaumprozess zugeführten Materials als Stellgröße dient.

9. Verfahren nach einem der Ansprüche 1 bis 8, wobei die Temperatur der Auftragsplatte (4) als Stellgröße dient.

10. Verfahren nach einem der Ansprüche 1 bis 9, wobei die Temperatur der dem Schaumprozess zugeführten Deckschichten (6, 7) als Stellgröße dient.

11. Verfahren nach einem der Ansprüche 1 bis 10, wobei die Temperatur der Doppeltransportbandanlage als Stellgröße dient.

12. Verfahren nach einem der Ansprüche 1 bis 11, wobei der Druck der Reaktionskomponenten bei einer Hochdruckvermischung als Stellgröße dient.

13. Verfahren nach einem der Ansprüche 1 bis 12, bei dem zumindest eine Produkteigenschaft der Schaumstoffplatte, die sich in einem bestimmten Bereich entlang der Förderrichtung befindet, in Abhängigkeit vom Ist-Aufschäumprofil prognostiziert wird.

14. Verfahren nach Anspruch 13, bei dem die Prognose der zumindest einen Produkteigenschaft mittels eines Regressionsmodells erfolgt.

15. Verfahren nach Anspruch 13, bei dem die Prognose der zumindest einen Produkteigenschaft mittels eines neuronalen Netzes oder eines hybriden neuronalen Netzes erfolgt.

16. Verfahren nach Anspruch 15, bei dem dem neuronalen Netz zumindest das Ist-Aufschäumprofil als Eingangsparameter eingegeben wird.

17. Verfahren nach einem der Ansprüche 13 bis 16, bei dem die zumindest eine Produkteigenschaft zur Klassifizierung der Güte der Schaumstoffplatte verwendet wird.

18. Verfahren nach Anspruch 17, bei dem Bereiche der Schaumstoffplatte, die eine geringe Güte aufweisen, ausgeschnitten werden.

19. Anlage zur Herstellung von Schaumstoff in einem kontinuierlichem Schaumprozess mit
- Mitteln (9) zur Erfassung des Ist-Aufschäumprofils der Schaumstoffplatte,
- Mitteln (12) zur Bestimmung einer Stellgröße für den Schaumprozess in Abhängigkeit von einer Abweichung des Ist-Aufschäumprofils vom vorgegebenen Soll-Aufschäumprofil.

20. Doppeltransportbandanlage gemäß Anspruch 19.

21. Anlage nach Anspruch 19 oder 20, bei der die Mittel zur Erfassung des Ist-Aufschäumprofils (9) Laserabstandssensoren, Laserscanner, Ultraschallsensoren oder CCD-Kameras aufweisen.

22. Anlage nach einem der Ansprüche 19 bis 21, bei der die Mittel zur Bestimmung einer Stellgröße zur Bestimmung der Fördergeschwindigkeit ausgebildet sind.

23. Anlage nach einem der Ansprüche 19 bis 22, bei der die Mittel zur Bestimmung einer Stellgröße zur Bestimmung der pro Zeiteinheit dem Schaumprozess zuzuführenden Materialmenge ausgebildet sind.

24. Anlage nach einem der Ansprüche 19 bis 23, bei der die Mittel zur Bestimmung der Stellgröße zur Bestimmung der chemischen Zusammensetzung des dem Schaumprozess zuzuführenden Materials ausgebildet sind.

25. Anlage nach einem der Ansprüche 19 bis 24, bei der die Mittel zur Bestimmung der Stellgröße zur Bestimmung des Verarbeitungsdrucks für die Komponenten des Schaumstoffs ausgebildet sind.

26. Anlage nach einem der Ansprüche 19 bis 25, bei der die Mittel zur Bestimmung der Stellgröße zur Bestimmung der Temperatur des dem Schaumprozess zugeführten Materials ausgebildet sind.

27. Anlage nach einem der Ansprüche 19 bis 26, bei der die Mittel zur Bestimmung der Stellgröße zur Bestimmung der Temperatur der Auftragsplatte (4) ausgebildet sind.

28. Anlage nach einem der Ansprüche 19 bis 27, bei der Mittel zur Bestimmung der Stellgröße zur Bestimmung der Temperatur der dem Schaumprozess zugeführten Deckschichten (6, 7) ausgebildet sind.

29. Anlage nach einem der Ansprüche 19 bis 28, bei der Mittel zur Bestimmung der Stellgröße zur Bestimmung der Temperaturen der Doppeltransportbandanlage ausgebildet sind.

30. Anlage nach einem der Ansprüche 19 bis 29 mit Mitteln zur Prognose von zumindest einer Produkteigenschaft des Schaumstoff, der sich an einer bestimmten Position entlang der Förderrichtung befindet, in Abhängigkeit vom Ist-Aufschäumprofil.

31. Anlage nach Anspruch 30 mit Mitteln zur Steuerung einer Schneidvorrichtung zur Zerteilung des Schaumstoffs in Platten, die eine prognostizierte Produkteigenschaft aufweisen.
